# FASCICULE DE BREVET EUROPEEN

(11) **EP 2 943 381 B1**
(45) Date de publication et mention de la délivrance du brevet: **28.09.2016**
(21) Numéro de dépôt: 13820833.5
(22) Date de dépôt: 19.12.2013
(51) Int. Cl.: B60W 30/20, B60W 20/00, B60W 50/06, B60K 6/52

(54) **PROCÉDÉ DE CONTRÔLE D'UNE FONCTION D'AGRÉMENT CURATIF QUI LIMITE DES OSCILLATIONS D'UNE MACHINE ÉLECTRIQUE**
VERFAHREN ZUR STEUERUNG EINER KORRIGIERENDEN SCHWINGUNGSREDUZIERUNGSFUNKTION ZUR BEGRENZUNG DER SCHWINGUNGEN EINER ELEKTRISCHEN MASCHINE
METHOD FOR CONTROLLING A CORRECTIVE OSCILLATION-REDUCING FUNCTION THAT LIMITS OSCILLATIONS OF AN ELECTRIC MACHINE

(30) Priorité: 11.01.2013 FR 1350246
(43) Date de publication de la demande: 18.11.2015
(73) Titulaire: Peugeot Citroën Automobiles SA, 78140 Vélizy Villacoublay (FR)
(72) Inventeur: MILHAU, Yohan, F-78400 Chatou (FR); ZUMELLA, Franck, F-78400 Chatou (FR); ROCQ, Gaetan, F-78125 La Boissière Ecole (FR)
(86) Numéro de dépôt international: PCT/FR2013/053202
(87) Numéro de publication internationale: WO 2014/108620

(56) Documents cités:
- DE-A1-102011 075 883
- FR-A1- 2 910 198
- JP-A- 2005 151 797
- US-A1- 2006 025 906

## Description

La présente invention concerne un procédé de contrôle d'une fonction d'agrément curatif qui limite des oscillations de vitesse ou de couple sur les roues entraînées par une machine électrique, d'un véhicule électrique ou hybride, ainsi qu'un véhicule électrique ou hybride mettant en oeuvre un tel procédé.

Un type de véhicule hybride connu comporte un moteur thermique entraînant les roues avant par une boîte de vitesses, et une machine électrique entraînant les roues arrière par une transmission, afin de réaliser notamment un roulage en mode hybride qui optimise le fonctionnement du moteur thermique, ou en mode électrique sans émission de gaz polluants.

Pour limiter des oscillations de vitesse ou de couple sur des arbres de transmission de la machine électrique, qui génèrent des à-coups causant des désagréments, une fonction connue de commande de cette machine, présentée notamment par le document FR-A1-2910198, réalise une correction de la consigne de couple donnée à cette machine par la soustraction d'un signal correctif établi à partir de mesures de la vitesse instantanée de l'arbre.

En particulier, cette fonction qui contrôle les oscillations par une régulation de couple, appelée aussi fonction d'agrément curatif, doit donner des corrections parfaitement synchronisées avec les mesures de vitesse de l'arbre. Les calculs et les corrections à appliquer sont réalisés par des stratégies mises en oeuvre par des calculateurs pilotant directement les organes concernés, afin d'être le plus réactif possible.

Toutefois dans certains cas particuliers de fonctionnement, il arrive que la fonction d'agrément curatif ne soit pas capable d'atténuer les oscillations de vitesse de l'arbre, en entretenant ces oscillations, ou même en les faisant diverger. Pour ce type de fonction, le conducteur n'a pas la possibilité d'intervenir pour arrêter le procédé d'agrément curatif en cas de correction inadaptée.

On a alors des vibrations ou des à-coups dans la transmission transmis au véhicule, qui dégradent la prestation de confort. De plus, c'est vibrations peuvent entraîner une usure et un endommagement des éléments de la transmission, qui peuvent causer des défaillances.

La présente invention a notamment pour but d'éviter ces inconvénients de la technique antérieure.

Elle propose à cet effet un procédé de contrôle d'une fonction d'agrément curatif qui limite des oscillations de vitesse ou de couple sur des éléments de transmission reliant une machine électrique aux roues d'un véhicule électrique ou hybride, cette fonction réalisant à partir de mesures de vitesse ou de couple sur la transmission, une correction de la consigne de couple donnée à cette machine afin de limiter ces oscillations, caractérisé en ce que pendant l'activation de la fonction d'agrément, il réalise un comptage dans une limite de temps du nombre d'oscillations importantes dépassant un seuil d'intensité prédéfini, et à partir d'un certain nombre de dépassements il désactive la fonction de commande d'agrément curatif.

Un avantage du procédé de contrôle de la fonction d'agrément curatif selon l'invention, est que de manière automatique, en limitant le nombre d'oscillations importantes successives dans un temps donné, qui traduirait un défaut de cette fonction dans certains cas particuliers causant un entretien ou une divergence des oscillations, par la désactivation de cette fonction pour une petite durée, il interrompt instantanément l'entretien ou la divergence des oscillations causé par cette fonction pour préserver le confort et éviter un endommagement de la transmission, de manière à pouvoir ensuite réactiver cette fonction à partir de nouvelles données.

Le procédé de contrôle de la fonction d'agrément curatif selon l'invention peut en outre comporter une ou plusieurs des caractéristiques suivantes, qui peuvent être combinées entre elles.

Avantageusement, le procédé réalise la filtration de la mesure de vitesse ou de couple sur l'élément de la transmission, par un filtre du type 1^{er} ordre comportant une constante de temps très faible pour donner une première courbe brute, et sa filtration par un filtre du 2^{ème} ordre comportant une constante de temps importante pour donner une deuxième courbe fortement filtrée, puis il construit par des décalages de cette deuxième courbe une enveloppe supérieure et une enveloppe inférieure, formant les seuils d'intensité pour la détection des oscillations importantes quand la courbe brute dépasse ces enveloppes.

Avantageusement, les valeurs des décalages de la deuxième courbe donnant les enveloppes, sont variables en fonction de la valeur de cette deuxième courbe.

En particulier, le filtre du 1^{er} ordre peut comporter une constante de temps qui est de l'ordre de 20ms, et le filtre du 2^{ème} ordre une constante de temps qui est de l'ordre de 500ms.

Avantageusement, après le comptage du dépassement d'une des enveloppes, le procédé réalise un comptage seulement pour un dépassement de l'autre enveloppe.

Avantageusement, le procédé initialise le comptage à la valeur nulle après qu'un temps prédéfini assez long se passe sans incrémentation de ce comptage.

Avantageusement, la fonction d'agrément curatif est réactivée lorsque que le compteur est réinitialisé à la valeur nulle, après qu'un temps prédéfini se passe sans incrémentation de ce comptage.

Avantageusement, la fonction de traitement curatif est désactivée ou activée avec un mode de descente ou de montée, comportant une activation partielle progressive pendant un temps prédéfini.

L'invention a aussi pour objet un véhicule hybride ou électrique comportant une machine électrique entraînant des roues motrices, ce véhicule comprenant une fonction d'agrément curatif qui limite des oscillations de vitesse ou de couple sur un élément de la transmission de cette machine, le véhicule comportant des moyens mettant en oeuvre un procédé de contrôle de cette fonction réalisé selon l'une quelconque des revendications précédentes.

En particulier, le véhicule peut comporter un moteur thermique entraînant les roues avant, et une machine électrique entraînant les roues arrière.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un schéma d'un véhicule hybride mettant en oeuvre un procédé de contrôle selon l'invention ;
- la figure 2 est un schéma simplifié des principales fonctions de contrôle des motorisations de ce véhicule ;
- la figure 3 est un schéma de deux coordinations possibles de la commande d'activation de la fonction d'agrément curatif, avec d'autres conditions d'activation ou de désactivation ; et
- la figure 4 est un graphique présentant en fonction du temps, dans sa partie supérieure des oscillations de vitesse ou de couple sur la transmission de la machine électrique, et dans sa partie inférieure le comptage des oscillations importantes.

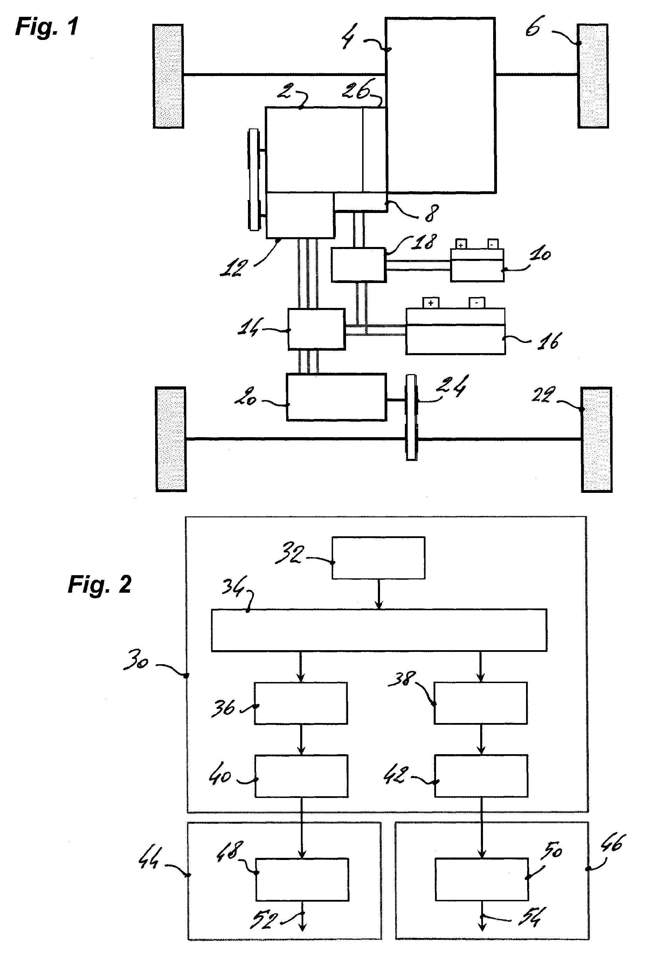

La figure 1 présente un véhicule hybride comportant un moteur thermique 2 lié par un embrayage 26 à l'arbre primaire d'une boîte de vitesses 4 comprenant une commande automatique de l'embrayage et des passages de vitesses, qui entraîne les roues avant 6 de ce véhicule. Le moteur thermique 2 comporte un démarreur électrique 8, alimenté en courant par une batterie basse tension 10.

En variante, le moteur thermique 2 pourrait entraîner les roues avant 6 par d'autres types de transmission, comme une boîte de vitesses automatique « BVA », une transmission à variation continue du rapport « CVT », une boîte de vitesses manuelle ou une boîte à double embrayage.

Une machine électrique avant 12 est couplée en permanence au moteur thermique 2, afin de l'assister dans son fonctionnement.

Une machine électrique arrière 20 alimentée par une batterie haute tension 16, peut être couplée aux roues arrière 22 du véhicule par une transmission 24 comprenant un dispositif de crabotage, ou un embrayage.

Les deux machines électriques 12, 20 sont reliées à un onduleur 14, qui est lui-même relié à la batterie haute tension 16 permettant de recevoir ou de délivrer une puissance électrique importante.

Un convertisseur de courant DC-DC 18 est interposé entre la batterie basse tension 10 et la batterie haute tension 16, afin de recharger si nécessaire cette batterie basse tension à partir d'une énergie prélevée dans la batterie haute tension, ou venant de l'onduleur 14, avec une adaptation de la tension du courant réalisée par ce convertisseur.

Un système de supervision de la chaîne de traction coordonne le fonctionnement des deux motorisations 2, 20, de la boîte de vitesses 4 en choisissant son rapport, et de l'embrayage 26, pour décider du mode de roulage répartissant la puissance à obtenir en fonction des demandes du conducteur, afin d'obtenir une optimisation des points de fonctionnement qui permet notamment de réduire la consommation d'énergie et les émissions de gaz polluants.

Le véhicule hybride peut ainsi fonctionner avec des modes de roulage comprenant un mode électrique utilisant la machine électrique arrière 20, le moteur thermique 2 étant arrêté et la boîte de vitesses 4 étant au point mort, ou l'embrayage 26 étant ouvert, un mode hybride utilisant les deux motorisations, un mode quatre roues motrices avec les deux motorisations, appelé aussi mode « E-AWD », permettant d'améliorer la motricité et la tenue de route du véhicule, ainsi qu'un mode sport.

La figure 2 présente un système de pilotage des motorisations 2, 20 de ce véhicule, permettant d'adapter de manière automatique le type de fonctionnement de chacune des motorisations afin de répondre à la volonté du conducteur.

Un superviseur 30 formant une couche haute, est chargé d'élaborer des consignes pour chaque motorisation à partir d'informations 32 données par le conducteur, comme l'état du levier de commande de la boîte de vitesses, ou les manoeuvres des pédales, ainsi que d'informations sur l'état du véhicule, comme sa vitesse.

Ces consignes sont réparties entre les deux motorisations 2, 20 par une fonction de répartition 34, puis envoyées à chaque motorisation par une fonction d'agrément préventif 36, 38, pour donner une consigne de train avant 40 et de train arrière 42.

Chaque fonction d'agrément préventif 36, 38 est un filtre permettant de maîtriser le gradient de couple lorsque que des jeux mécaniques dans la transmission sont sollicités, notamment par des inversions de couple s'appliquant sur cette transmission. Ce filtrage dépend de plusieurs paramètres présents dans le superviseur 30, comme la volonté conducteur ou le mode du fonctionnement du véhicule.

Les consignes des trains avant 40 et arrière 42 sont ensuite envoyées à des couches basses indépendantes de pilotage rapproché, respectivement pour le moteur thermique avant 44 et pour la machine électrique arrière 46. Chaque couche basse comporte une fonction d'agrément curatif 48, 50. On a donc pour chaque motorisation successivement une fonction d'agrément préventif et une fonction d'agrément curatif, pour obtenir la consigne finale de couple sur le moteur thermique 52 ou sur la machine électrique 54.

Chaque fonction d'agrément curatif 48, 50 est un contrôleur qui agit sur les oscillations de la vitesse de manière à les atténuer, par une régulation de la consigne de couple de la motorisation concernée. Les actions correctives doivent donc être synchronisées avec les mesures instantanées de vitesse ou de couple de la transmission, données par des capteurs, et les commandes en couple de la motorisation.

Les fonctions d'agrément curatif 48, 50 sont réalisées par des stratégies mises en oeuvre par les calculateurs qui pilotent directement chaque motorisation, afin d'obtenir la meilleure réactivité. Toutefois, dans certains cas particuliers ces fonctions ne sont pas capables d'atténuer les oscillations, et peuvent même les entretenir ou les faire diverger.

Chaque fonction d'agrément curatif 48, 50 reçoit un flux d'activation « FAS » émis par le superviseur 30, qui est compris entre 0 et 1. Lorsque la valeur du flux d'activation « FAS » est nulle l'agrément curatif est désactivé, et lorsque cette valeur est égale à 1 l'agrément curatif est totalement activé. Pour des valeurs comprises entre 0 et 1, la fonction d'agrément curatif est partiellement activée, en proportion de cette valeur.

Le procédé selon l'invention réalise une désactivation de la fonction d'agrément curatif 50 de la machine électrique 20, lorsqu'une oscillation entretenue de vitesse ou de couple de cette machine est détectée, cette fonction n'arrivant pas à corriger ces oscillations qui comportent une intensité trop élevée.

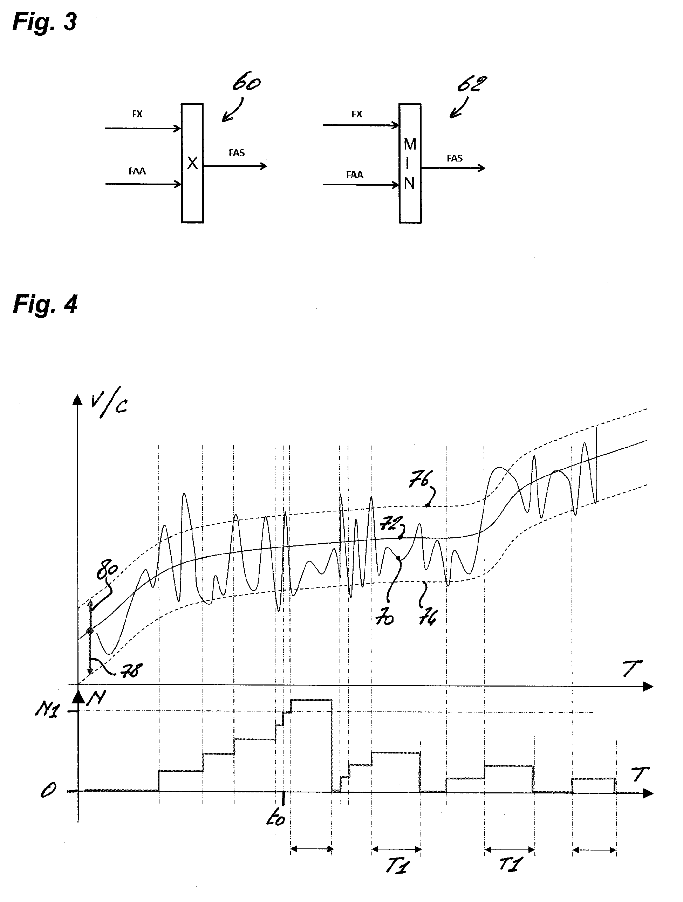

La figure 3 présente la fonction d'agrément curatif émettant un signal d'activation de l'agrément « FAA », qui est ensuite coordonné avec d'autres conditions d'activation ou de désactivation de cette fonction « FX », afin de calculer la valeur de flux d'activation « FAS » pour la machine électrique 20. Les autres conditions « FX » proviennent de certaines informations sur l'état du véhicule et sur des commandes du conducteur.

Le côté gauche de la figure 3 présente un premier type de coordination 60, comportant une multiplication de la valeur des autres conditions « FX » avec celle du signal d'activation de l'agrément « FAA », pour obtenir la valeur du flux d'activation « FAS ». Le côté droit de la figure présente un deuxième type de coordination 62, qui retient la plus petite des valeurs entre celle des autres conditions « FX » et celle de l'agrément « FAA », pour obtenir la valeur du flux d'activation « FAS ».

Le principe de fonctionnement du procédé de contrôle de la fonction d'agrément curatif 50, présenté par la figure 4, part d'une mesure 70 d'au moins une des deux valeurs, la vitesse V ou le couple C, effectuée sur un organe de transmission de la machine électrique.

La mesure de vitesse ou de couple V/C est filtrée par un filtre du type 1^{er} ordre comportant une constante de temps très faible, par exemple de 20ms, pour donner une première courbe brute 70. La mesure de vitesse ou de couple V/C est aussi filtrée par un filtre du 2^{ème} ordre comportant une constante de temps importante, par exemple de 500ms, pour donner une deuxième courbe fortement filtrée 72.

A partir de la deuxième courbe fortement filtrée 72, on construit une enveloppe supérieure 76 comportant un décalage de vitesse ou de couple 80 qui est calibrable de manière variable, en fonction de la valeur instantanée de cette courbe. On construit aussi une enveloppe inférieure 74, comportant de la même manière un décalage de vitesse ou de couple 78 fonction de la valeur instantanée.

Le procédé utilise un compteur N démarrant à une valeur nulle, qui additionne chaque sortie de la courbe brute 70 lors de ses oscillations, en dehors de l'enveloppe supérieure 76 ou inférieure 74. Toutefois après une sortie d'une des enveloppes, le procédé enregistre seulement une sortie hors de l'autre enveloppe afin de ne prendre en compte que certaines oscillations comprenant une amplitude importante. Par exemple, une sortie hors de l'enveloppe supérieure 76 ne peut être prise en compte dans incrémentation du comptage N, qu'après une sortie de l'enveloppe inférieure 74.

Le procédé initialise le compteur N à la valeur nulle après chaque mise en action du conducteur, notamment lors du démarrage du véhicule. Le compteur N est aussi initialisé à la valeur nulle pendant la régulation de la fonction d'agrément curatif, après qu'un temps prédéfini assez long T1 se passe sans incrémentation de ce comptage, ce temps pouvant être de l'ordre de 500ms.

Lorsque le compteur N dépasse un seuil prédéfini N1, qui est dans cet exemple de cinq sorties, comme présenté au temps t0, la fonction de traitement curatif 50 est alors désactivée par le signal d'activation de l'agrément « FAA » qui passe de 1 à 0 avec un certain mode de descente. Le mode de descente peut comporter une rampe linéaire ou des incréments, prédéfinis pour passer de 1 à 0 pendant un temps prédéfini relativement court, par exemple de l'ordre de 200ms.

Le signal d'activation de l'agrément « FAA » repasse ensuite à la valeur 1 pour permettre une nouvelle activation de la fonction d'agrément curatif, par le signal d'activation de l'agrément « FAA » qui passe de 0 à 1 avec un certain mode de montée. D'une manière similaire, le mode de montée peut comporter une rampe linéaire ou des incréments pour passer de 0 à 1, pendant un temps prédéfini relativement court, par exemple de l'ordre de 200ms.

On réalise ainsi des transitions vers la désactivation ou l'activation de la fonction d'agrément curatif, qui ne sont pas brutales.

On peut en variante établir deux signaux particuliers d'activation de l'agrément « FAA1 », « FAA2 », à partir de la mesure de vitesse V pour l'un et de couple C pour l'autre, pour ensuite les combiner afin d'obtenir un signal global d'activation de l'agrément « FAA » tenant compte à la fois de ces deux mesures.

L'intérêt de ce procédé est d'éviter les phénomènes d'auto-entretien, voir de divergence des oscillations de la vitesse ou du couple, qui seraient causés par la fonction d'agrément curatif lorsqu'elle n'arrive pas à agir de manière bénéfique sur le système. Le principal avantage de ce procédé repose sur sa robustesse qui permet de ne pas désactiver à tort la fonction d'agrément curatif, et de la désactiver dans les situations où elle n'est pas efficace, à cause par exemple d'une dispersion importante de composants de la transmission, ou de l'impact de l'environnement extérieur tel qu'une faible adhérence de la voie de circulation, ou une déformation de cette voie.

On peut éviter ainsi des désagréments importants pour les passagers du véhicule, ainsi que des défaillances prématurées d'éléments de la transmission causées par des sollicitations mécaniques trop fortes.

## Revendications

1. Procédé de contrôle d'une fonction d'agrément curatif (50) qui limite des oscillations de vitesse ou de couple sur des éléments de transmission reliant une machine électrique (20) aux roues (22) d'un véhicule électrique ou hybride, cette fonction réalisant à partir de mesures de la vitesse ou du couple (70) sur la transmission, une correction de la consigne de couple donnée à cette machine afin de limiter ces oscillations, **caractérisé en ce que** pendant l'activation de la fonction d'agrément (50), il réalise un comptage (N) dans une limite de temps du nombre d'oscillations importantes dépassant un seuil d'intensité prédéfini (74, 76), et à partir d'un certain nombre de dépassements il désactive la fonction de commande d'agrément curatif (50).

2. Procédé de contrôle selon la revendication 1, **caractérisé en ce qu'**il réalise la filtration de la mesure de vitesse ou de couple sur l'élément de la transmission, par un filtre du type 1^{er} ordre comportant une constante de temps très faible pour donner une première courbe brute (70), et sa filtration par un filtre du 2^{ème} ordre comportant une constante de temps importante pour donner une deuxième courbe fortement filtrée (72), puis il construit par des décalages (78, 80) de cette deuxième courbe une enveloppe supérieure (76) et une enveloppe inférieure (74), formant les seuils d'intensité pour la détection des oscillations importantes quand la courbe brute dépasse ces enveloppes.

3. Procédé de contrôle selon la revendication 2, **caractérisé en ce que** les valeurs des décalages (78, 80) de la deuxième courbe (72) donnant les enveloppes (74, 76), sont variables en fonction de la valeur de cette deuxième courbe.

4. Procédé de contrôle selon la revendication 2 ou 3, **caractérisé en ce que** le filtre du 1^{er} ordre comporte une constante de temps qui est de l'ordre de 20ms, et le filtre du 2^{ème} ordre une constante de temps qui est de l'ordre de 500ms.

5. Procédé de contrôle selon l'une quelconque des revendications 2 à 4, **caractérisé en ce qu'**après le comptage (N) du dépassement d'une des enveloppes, il réalise un comptage seulement pour un dépassement de l'autre enveloppe.

6. Procédé de contrôle selon l'une quelconque des revendications précédentes, **caractérisé en ce qu'**il initialise le comptage (N) à la valeur nulle après qu'un temps prédéfini assez long (T1) se passe sans incrémentation de ce comptage.

7. Procédé de contrôle selon la revendication 6, **caractérisé en ce que** la fonction d'agrément curatif (50) est réactivée lorsque le compteur (N) est réinitialisé à la valeur nulle après qu'un temps prédéfini se passe sans incrémentation de ce comptage.

8. Procédé de contrôle selon l'une quelconque des revendications précédentes, **caractérisé en ce que** la fonction de traitement curatif (50) est désactivée ou activée avec un mode de descente ou de montée, comportant une activation partielle progressive pendant un temps prédéfini.

9. Véhicule hybride ou électrique comportant une machine électrique (20) entraînant des roues motrices (22), ce véhicule comprenant une fonction d'agrément curatif (50) qui limite des oscillations de vitesse ou de couple sur un élément de la transmission de cette machine, **caractérisé en ce qu'**il comporte des moyens mettant en oeuvre un procédé de contrôle de cette fonction réalisé selon l'une quelconque des revendications précédentes.

10. Véhicule selon la revendication 9, **caractérisé en ce qu'**il comporte un moteur thermique (2) entraînant les roues avant (6), et une machine électrique (20) entraînant les roues arrière (22).

## Patentansprüche

1. Verfahren zur Steuerung einer korrigierenden Reduzierungsfunktion (50), die die Geschwindigkeits- und Drehmomentschwingungen auf Übertragungsmaschinen begrenzt, die eine elektrische Maschine (20) mit den Rädern (22) eines Elektro- oder Hybridfahrzeugs verbindet, wobei diese Funktion auf Basis von Messungen der Geschwindigkeit oder des Drehmoments (70) an der Übertragung eine Korrektor des dieser Maschine vorgegebenen Drehmomentsollwerts vornimmt, um diese Schwingungen zu begrenzen, **dadurch gekennzeichnet, dass** während der Aktivierung der Reduzierungsfunktion (50) ein Zählen (N) der Anzahl von starken Schwingungen, die eine vordefinierte Intensitätsgrenze (74, 76) überschreiten, innerhalb einer Zeitgrenze erfolgt, und ab einer gewissen Anzahl von Überschreitungen die Funktion zur Steuerung einer korrigierenden Reduzierung (50) deaktiviert wird.

2. Steuerungsverfahren nach Anspruch 1, **dadurch gekennzeichnet, dass** es die Filterung der Messung der Geschwindigkeit und des Drehmoments am Element der Übertragung durch einen Filter vom Typ 1. Ordnung durchführt, umfassend eine sehr geringe Zeitkonstante, um eine erste Bruttokurve (70) zu ergeben, und ihre Filterung durch einen Filter 2. Ordnung durchführt, umfassend eine größere Zeitkonstante, um eine zweite stark gefilterte Kurve (72) zu ergeben, dann durch Versatz (78, 80) dieser zweiten Kurve eine obere Hülle (76) und eine untere Hülle (74) konstruiert, die die Intensitätsgrenzen für die Erfassung der starken Schwingungen bilden, wenn die Bruttokurve diese Hüllen überschreitet.

3. Steuerungsverfahren nach Anspruch 2, **dadurch gekennzeichnet, dass** die Versatzwerte (78, 80) der zweiten Kurve (72), die die Hüllen (74, 76) ergeben, in Abhängigkeit vom Wert dieser zweiten Kurve variabel sind.

4. Steuerungsverfahren nach Anspruch 2 oder 3, **dadurch gekennzeichnet, dass** der Filter 1. Ordnung eine Zeitkonstante umfasst, die ungefähr 20ms beträgt, und der Filter 2. Ordnung eine Zeitkonstante umfasst, die ungefähr 500ms beträgt.

5. Steuerungsverfahren nach einem der Ansprüche 2 bis 4, **dadurch gekennzeichnet, dass** nach dem Zählen (N) der Überschreitung einer der Hüllen ein Zählen nur für eine Überschreitung der anderen Hülle erfolgt.

6. Steuerungsverfahren nach einem der vorhergehenden Ansprüche, **dadurch gekennzeichnet, dass** es das Zählen (N) auf den Wert Null initialisiert, nachdem eine relativ lange vordefinierte Zeit (T1) ohne Inkrementierung dieses Zählens vergeht.

7. Steuerungsverfahren nach Anspruch 6, **dadurch gekennzeichnet, dass** die korrigierende Reduzierungsfunktion (50) reaktiviert wird, wenn der Zähler (N) wieder auf den Wert Null initialisiert wird, nachdem eine vordefinierte Zeit ohne Inkrementierung dieses Zählens vergeht.

8. Steuerungsverfahren nach einem der vorhergehenden Ansprüche, **dadurch gekennzeichnet, dass** die korrigierende Reduzierungsfunktion (50) mit einem Abstiegs- oder Aufstiegsmodus, umfassend eine teilweise progressive Aktivierung während einer vordefinierten Zeit, deaktiviert oder aktiviert wird.

9. Hybrid- oder Elektrofahrzeug, umfassend eine elektrische Maschine (20), die Antriebsräder (22) antreibt, wobei dieses Fahrzeug eine korrigierende Reduzierungsfunktion (50) umfasst, die Geschwindigkeits- oder Drehmomentschwingungen an einem Übertragungselement dieser Maschine begrenzt, **dadurch gekennzeichnet, dass** es Mittel umfasst, die ein Steuerungsverfahren dieser Funktion, das nach einem der vorhergehenden Ansprüche ausgeführt wird, einsetzen.

10. Fahrzeug nach Anspruch 9, **dadurch gekennzeichnet, dass** es einen Verbrennungsmotor (2) umfasst, der die Vorderräder (6) antreibt, und eine elektrische Maschine (20), die die Hinterräder (22) antreibt.

## Claims

1. A method for controlling a corrective oscillation-reducing function (50) that limits the speed or torque oscillations on transmissible elements linking an electric machine (20) to the wheels (22) of an electric or hybrid vehicle, said function correcting the torque setpoint given to this machine in order to limit these oscillations, from speed or torque measurements (70) on the transmission, **characterized in that**, during the activation of the smoothness function (50), it counts (N) the number of significant oscillations exceeding a predefined strength threshold (74, 76) within a time limit, and when said threshold has been exceeded a certain number of times, it deactivates the curative smoothness control function (50).

2. The method for controlling according to claim 1, **characterized in that** it carries out the filtration of the measurement of speed or torque on the transmission element, by a filter of the 1^{st} order type, comprising a very low time constant to give a first raw curve (70), and its filtration by a filter of the 2^{nd} order comprising a large time constant to give a second highly filtered curve (72), then it constructs by shifts (78, 80) of this second curve an upper envelope (76) and a lower envelope (74), forming intensity thresholds for the detection of the large oscillations when the raw curve exceeds these envelopes.

3. The method for controlling according to claim 2, **characterized in that** the values of the shifts (78, 80) of the second curve (72) giving the envelopes (74, 76) are variable as a function of the value of this second curve.

4. The method for controlling according to claim 2 or 3, **characterized in that** the filter of the 1^{st} order comprises a time constant which is in the order of 20ms, and the filter of the 2^{nd} order comprises a time constant which is in the order of 500ms.

5. The method for controlling according to any one of claims 2 to 4, **characterized in that** after the count (N) of the exceeding of one of the envelopes, it carries out a count solely for an exceeding of the other envelope.

6. The method for controlling according to any one of the preceding claims, **characterized in that** it initializes the count (N) to the value zero after quite a long predefined time (T1) passes without incrementation of this count.

7. The method for controlling according to claim 6, **characterized in that** the corrective oscillation-reducing function (50) is reactivated when the counter (N) is reinitialized to the value zero after a predefined time passes without incrementation of this count.

8. The method for controlling according to any one of the preceding claims, **characterized in that** the corrective oscillation-reducing function (50) is deactivated or activated with a fall or rise mode, comprising a progressive partial activation during a predefined time.

9. A hybrid or electric vehicle comprising an electric machine (20) driving the drive wheels (22), this vehicle including a corrective oscillation-reducing function (50) which limits oscillations of speed or torque on an element of the transmission of this machine, **characterized in that** it comprises means implementing a method for controlling this function realized according to any one of the preceding claims.

10. The vehicle according to claim 9, **characterized in that** it comprises a heat engine (2) driving the front wheels (6), and an electric machine (20) driving the rear wheels (22).
